# EUROPEAN PATENT APPLICATION

(11) **EP 3 739 281 A1**
(43) Date of publication of application: **18.11.2020**
(21) Application number: 18900010.2
(22) Date of filing: 24.12.2018
(51) Int. Cl.: F25D 25/02, F25D 29/00, H02J 7/00

(54) **WIRELESS POWER SUPPLY SYSTEM APPLIED TO REFRIGERATING DEVICE, DRAWER ASSEMBLY, AND REFRIGERATING DEVICE**

(30) Priority: 10.01.2018 CN 201810022881
(71) Applicant: Qingdao Haier Co., Ltd., Shandong 266101 (CN)
(72) Inventor: HUI, Bin, Qingdao, Shandong 266101 (CN); HE, Wenhua, Qingdao, Shandong 266101 (CN); LI, Xingwei, Qingdao, Shandong 266101 (CN)
(74) Representative: Lavoix
(86) International application number: PCT/CN2018/123089
(87) International publication number: WO 2019/137189

(57) **Abstract**

Provided are a wireless power supply system (100) applied to a refrigerating device, a drawer assembly (200) and the refrigerating device. The wireless power supply system (100) comprises a control module (1), a display control module (2), a wireless communication module (3), a wireless power supply module (4), a battery module (5), and a detection module (6). The wireless power supply module (4) comprises a wireless power supply receiving module (41) and a wireless power supply transmitting module (42); when the wireless power supply receiving module (41) gets close to the wireless power supply transmitting module (42) so as to achieve electrical connection, the display control module (2) is switched on; when the detection module (6) detects that the wireless power supply receiving module (41) gets away from the wireless power supply transmitting module (42) so as to achieve disconnection, the battery module (5) is discharged to switch on the display control module (2) so as to continuously supply power to the display control module (2).

## Description

The present application claims priority to Chinese Patent Application No. 201810022881.5, filed to the Chinese Patent Office on January 10, 2018 and titled "Wireless Power Supply System Applied To Refrigerating Device, Drawer Assembly, And Refrigerating Device", the content of which is incorporated herein by reference in its entirety.

### TECHNICAL FIELD

The present invention relates to the technical field of household appliance, and particularly to a wireless power supply system applied to a refrigerating device, a drawer assembly and a refrigerating device.

### BACKGROUND

As the consumption level rises, consumers have higher and higher requirements for refrigerators, which makes functions of refrigerators increasingly powerful. To facilitate consumers to use, door bodies of many refrigerators have a display screen. To facilitate users to adjust special function regions purposefully, it is necessary to implement, in the refrigeration compartment, a function of displaying and regulating the temperature in an upper layer and a lower layer of drawers and other performance features.

Therefore, it is necessary to provide an improved wireless power supply system applied to a refrigerating device, drawer assembly and refrigerating device to solve the above problems.

### SUMMARY

An object of the present invention is to provide a wireless power supply system that may continuously and effectively power a display control module, a drawer assembly and a refrigerating device.

In order to realize the purpose of the invention, the invention provides a wireless power supply system applied to a refrigerating device, wherein the wireless power supply system comprises a control module, a display control module, a wireless communication module electrically connected to the control module and the display control module, a wireless power supply module electrically connected to the display control module, a battery module electrically connected to the display control module to supply power, and a detection module electrically connected to the battery module and configured to monitor on and off of the wireless power supply module; the wireless power supply module comprises a wireless power supply receiving module electrically connected to the detection module, and a wireless power supply transmitting module provided in cooperation with the wireless power supply receiving module; when the wireless power supply receiving module and the wireless power supply transmitting module are located close to each other to establish an electrical connection, the display control module is turned on; when the detection module monitors that the wireless power supply receiving module and the wireless power supply transmitting module are located far away from each other and disconnected, the battery module discharges to turn on the display control module.

Optionally, the wireless power supply system further comprises a power source module electrically connected to the battery module to charge the battery module.

Optionally, the wireless power supply system further comprises a detection module electrically connected to the control module; when the detection module detects that the battery module is at a low power level, the power source module charges the battery module; when the detection module detects that the battery module is full, the power module powers off and stops charging the battery module.

Optionally, the wireless communication module comprises a signal transmitting module electrically connected to the control module, and a signal receiving module electrically connected to the display control module.

Optionally, the signal transmitting module is connected with the signal receiving module via Bluetooth or Wi-Fi.

In order to realize the purpose of the invention, the invention provides a drawer assembly, wherein the drawer assembly comprises a drawer with a top opening upwardly, a sealed bucket for receiving the drawer, and the wireless power supply system applied to the refrigerator apparatus, and the drawer comprises a drawer door at a front end and a drawer base connected to the drawer door; wherein the wireless power supply transmitting module is disposed on the sealed bucket, the battery module is disposed on the drawer, the display control module is disposed on the drawer door, the wireless power supply receiving module is disposed on the drawer base and corresponds to the position of the wireless power supply transmitting module on the sealed bucket, and the detection module is disposed on the drawer; when the drawer is pushed and received in the sealed bucket, the wireless power supply transmitting module and the wireless power supply receiving module get close to each other and are electrically communicated, thereby turning on the display control module; when the drawer is pulled out from the sealed bucket, the wireless power supply transmitting module and the wireless power supply receiving module get away from each other and disconnected, the battery module discharges and supplies power to the display control module.

Optionally, the drawer door comprises a drawer plate located in front of a drawer box and the display control module located at the bottom of the drawer plate and configured to regulate and display environmental parameters in the drawer box.

Optionally, the drawer further comprises a tray carrying the drawer base, and the tray is slidably disposed with the sealed bucket.

In order to realize the purpose of the invention, the invention provides a refrigerating device, comprising a cabinet open on one side and a door body pivotally fitted with the cabinet to close the opening, wherein the refrigerating device further comprises the drawer assembly having the wireless power supply system, and the drawer assembly is received in the cabinet.

Optionally, the cabinet comprises a liner provided with a refrigeration compartment, and the drawer assembly is received at the bottom of the refrigeration compartment.

Advantageous effects of the present invention are as follows: the wireless power supply system applied to the refrigerating device according to the present invention has a wireless power supply module and a wireless communication module disposed on the drawer assembly to continuously supply power to the display control module; when the wireless power supply receiving module and the wireless power supply transmitting module get close to each other to establish an electrical connection, the display control module is turned on; when the detection module monitors that the wireless power supply receiving module and the wireless power supply transmitting module get away from each other and disconnected, the battery module discharges to turn on the display control module, thereby ensuring that the display control module is in a continuously useable state during pushing and pulling of the drawer.

### BRIEF DESCRIPTION OF THE DRAWINGS

FIG. 1 is a perspective assembled view of a drawer assembly according to the present invention.
FIG. 2 is a perspective assembled view of FIG. 1 as viewed in another direction.
FIG. 3 is a partially exploded view of the drawer assembly according to the present invention.
FIG. 4 is a schematic diagram of a wireless power supply system according to the present invention.

### DETAILED DESCRIPTION

The present invention will be described in detail below with reference to the embodiments shown in the figures. However, these embodiments do not limit the present invention, and structural or functional variations made by those having ordinary skill in the art based on these embodiments are all included in the protection scope of the present invention.

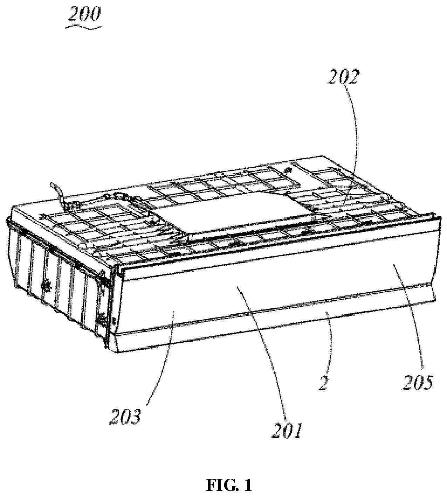

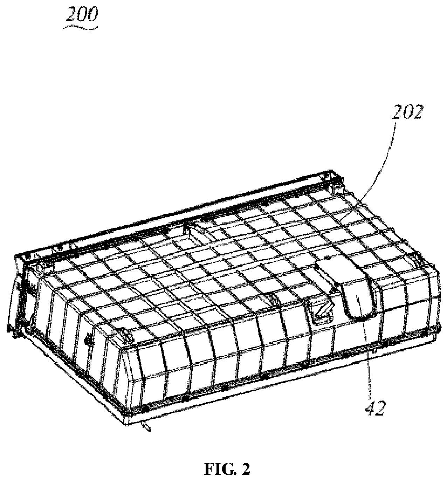

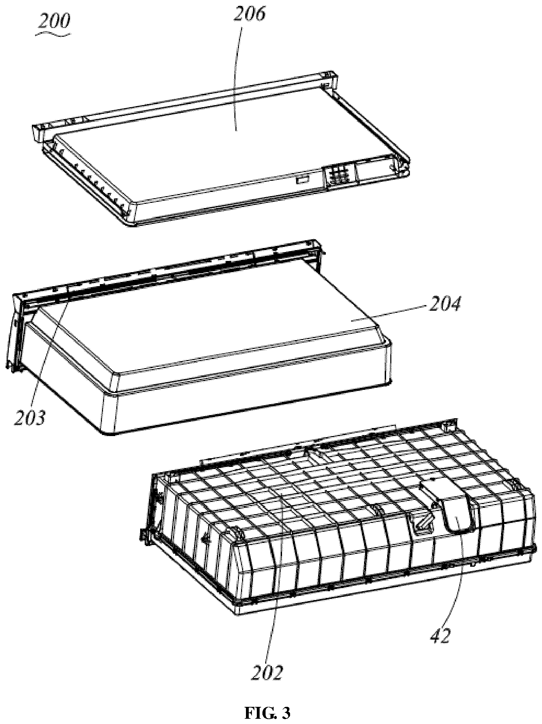

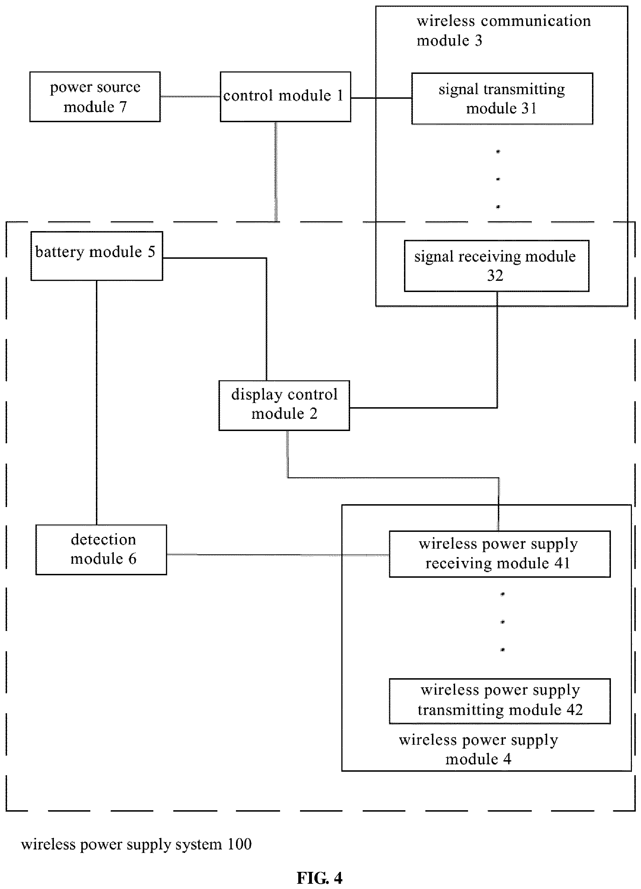

Referring to FIG. 1 through FIG. 4, a wireless power supply system 100 applied to a refrigerating device according to the present invention comprises a control module 1, a display control module 2, a wireless communication module 3 electrically connected to the control module 1 and the display control module 2, a wireless power supply module 4 electrically connected to the display control module 2, a battery module 5 electrically connected to the display control module 2 to supply power, and a detection module 6 electrically connected to the battery module 5 and configured to monitor on and off of the wireless power supply module 4. The wireless power supply module 4 comprises a wireless power supply receiving module 41 electrically connected to the detection module 6, and a wireless power supply transmitting module 42 provided in cooperation with the wireless power supply receiving module 41. When the wireless power supply receiving module 41 and the wireless power supply transmitting module 42 are located close to each other to establish an electrical connection, the display control module 2 is turned on; when the detection module 6 monitors that the wireless power supply receiving module 41 and the wireless power supply transmitting module 42 are located far away from each other and disconnected, the battery module 5 discharges to turn on the display control module 2.

The wireless power supply system 100 further comprises a power source module 7 electrically connected to the battery module 5 to charge the battery module 5, and a detection module 8 electrically connected to the control module 1. When the detection module 8 detects that the battery module 5 is at a low power level, the power source module 7 activates to charge the battery module 5. When the detection module 8 detects that the battery module 5 is full, the power module 7 powers off and stops charging the battery module 5.

The wireless communication module 3 comprises a signal transmitting module 31 electrically connected to the control module 1, and a signal receiving module 32 electrically connected to the display control module 2. When the wireless power supply receiving module 41 is disconnected from the wireless power supply transmitting module 42, the battery module 5 can continuously and stably supply power to the display control module 2 and the signal receiving module 32, thereby ensuring that the display control module 2 is in a continuously usable state.

The signal transmitting module 31 is connected with the signal receiving module 32 in a wireless communication manner such as Bluetooth or Wi-Fi.

A drawer assembly 200 according to the present invention comprises a drawer 201 with a top opening upwardly, a sealed bucket 202 for receiving the drawer 201, and the wireless power supply system 100. The drawer 201 comprises a drawer door 203 at a front end and a drawer base 204 connected to the drawer door 203. The wireless power supply transmitting module 42 is disposed on the sealed bucket 202, the battery module 5 is disposed on the drawer 201, and the display control module 2 is disposed on the drawer door 203. The wireless power supply receiving module 41 is disposed on the drawer base 204 and corresponds to the position of the wireless power supply transmitting module 42 on the sealed bucket 202, and the detection module 6 is disposed on the drawer 1.

In other embodiments, the wireless power supply receiving module 41 and the power supply transmitting module 42 may also be disposed at other positions, so long as the wireless power supply receiving module 41 and the power supply transmitting module 42 are within a connection distance when the drawer 201 is completely received in the sealed bucket 202.

The drawer door 203 comprises a drawer plate 205 located in front of the drawer base 204 and the display control module 2 located at the bottom of the drawer plate 205 and configured to regulate and display environmental parameters in the drawer 201. The display control module 2 may be used to regulate and display the temperature, humidity or other environmental parameters in the drawer 201, and may also be used to display parameters such as names and expiration dates of the stored food. The drawer assembly 200 further comprises a tray 206 carrying the drawer 201, and the tray 206 is slidably disposed with the sealed bucket 202.

When the drawer 201 is pushed and received in the sealed bucket 202, the wireless power supply transmitting module 42 and the wireless power supply receiving module 41 get close to each other and are electrically communicated within a connection distance, thereby turning on the display control module 2. When the drawer 1 is pulled out from the sealed bucket 2, the wireless power supply transmitting module 42 and the wireless power supply receiving module 41 get away from each other and get disconnected, and the detection module 6 monitors the disconnection of the two, so that the battery module 5 starts to discharge and supply power to the display control module 2 and the signal receiving module 32 such that the display control module 2 is in a continuously usable state.

In other embodiments, the wireless power supply receiving module 41 and the wireless power supply transmitting module 42 may each be formed by a coil, such that power is obtained from the wireless power supply transmitting module 42 and the power is supplied to the wireless power supply receiving module 41. When the wireless power supply receiving module 41 gets close to the wireless power supply transmitting module 42 and within a power supply range, the wireless power supply transmitting module 42 can charge the wireless power supply receiving module 41. In order to avoid a position deviation caused by the consistency of coupling areas of corresponding coils, the coil of one of the wireless power supply receiving module 41 and the wireless power supply transmitting module 42 is set larger, so that wireless charging can also be continuous and effectively performed even though the positions of the coils deviate. That is, when the drawer 201 is pulled out, the coils of the wireless power supply receiving module 41 and the wireless power supply transmitting module 42 still have a portion which is correspondingly within the power supply range, thereby ensuring that the drawing of the drawer 201 does not affect the wireless power supply, so that the display control module 2 is in a continuously useable state.

The refrigerating device comprises a cabinet open on one side, a door body pivotally fitted with the cabinet to close the opening, and the drawer assembly 200 having the wireless power supply system 100. The drawer assembly 200 is received in the cabinet. The cabinet comprises a liner provided with a refrigeration compartment, and the drawer assembly 200 is received at the bottom of the refrigeration compartment. The refrigeration compartment may have a plurality of drawer assemblies 200 to meet the needs of managing and controlling environmental parameters in regions. The control module 1, the signal transmitting module 31 and the power source module 7 are all disposed on the refrigerating device, and the power source module 7 may be an external power source for the refrigeration equipment.

In the present application, the refrigerating device is a refrigerator. Other components and operations of the refrigerator are known to those skilled in the art, and will not be described in detail any more here.

The detailed description set forth above is merely illustrative of the feasible embodiments of the present invention, and is not intended to limit the protection scope of the present invention. The equivalent embodiments or modifications made without departing from the spirit of the present invention are intended to be covered within the scope of the present invention.

## Claims

1. A wireless power supply system applied to a refrigerating device, wherein the wireless power supply system comprises a control module, a display control module, a wireless communication module electrically connected to the control module and the display control module, a wireless power supply module electrically connected to the display control module, a battery module electrically connected to the display control module to supply power, and a detection module electrically connected to the battery module and configured to monitor on and off of the wireless power supply module; the wireless power supply module comprises a wireless power supply receiving module electrically connected to the detection module, and a wireless power supply transmitting module provided in cooperation with the wireless power supply receiving module; when the wireless power supply receiving module and the wireless power supply transmitting module are located close to each other to establish an electrical connection, the display control module is turned on; when the detection module monitors that the wireless power supply receiving module and the wireless power supply transmitting module are located far away from each other and disconnected, the battery module discharges to turn on the display control module.

2. The wireless power supply system applied to a refrigerating device according to claim 1, wherein the wireless power supply system further comprises a power source module electrically connected to the battery module to charge the battery module.

3. The wireless power supply system applied to a refrigerating device according to claim 2, wherein the wireless power supply system further comprises a detection module electrically connected to the control module; when the detection module detects that the battery module is at a low power level, the power source module charges the battery module; when the detection module detects that the battery module is full, the power module powers off and stops charging the battery module.

4. The wireless power supply system applied to a refrigerating device according to claim 1, wherein the wireless communication module comprises a signal transmitting module electrically connected to the control module, and a signal receiving module electrically connected to the display control module.

5. The wireless power supply system applied to a refrigerating device according to claim 4, wherein the signal transmitting module is connected with the signal receiving module via Bluetooth or Wi-Fi.

6. A drawer assembly, wherein the drawer assembly comprises a drawer with a top opening upwardly, a sealed bucket for receiving the drawer, and the wireless power supply system applied to the refrigerator apparatus according to any of claims 1-5, and the drawer comprises a drawer door at a front end and a drawer base connected to the drawer door; wherein the wireless power supply transmitting module is disposed on the sealed bucket, the battery module is disposed on the drawer, the display control module is disposed on the drawer door, the wireless power supply receiving module is disposed on the drawer base and corresponds to the position of the wireless power supply transmitting module on the sealed bucket, and the detection module is disposed on the drawer; when the drawer is pushed and received in the sealed bucket, the wireless power supply transmitting module and the wireless power supply receiving module get close to each other and are electrically communicated, thereby turning on the display control module; when the drawer is pulled out from the sealed bucket, the wireless power supply transmitting module and the wireless power supply receiving module get away from each other and disconnected, the battery module discharges and supplies power to the display control module.

7. The drawer assembly having the wireless power supply system according to claim 6, wherein the drawer door comprises a drawer plate located in front of a drawer box and the display control module located at the bottom of the drawer plate and configured to regulate and display environmental parameters in the drawer box.

8. The drawer assembly having the wireless power supply system according to claim 7, wherein the drawer further comprises a tray carrying the drawer base, and the tray is slidably disposed with the sealed bucket.

9. A refrigerating device, comprising a cabinet open on one side and a door body pivotally fitted with the cabinet to close the opening, wherein the refrigerating device further comprises the drawer assembly having the wireless power supply system according to claim 6, and the drawer assembly is received in the cabinet.

10. The refrigerating device according to claim 9, wherein the cabinet comprises a liner provided with a refrigeration compartment, and the drawer assembly is received at the bottom of the refrigeration compartment.
